# FASCICULE DE BREVET EUROPEEN

(11) **EP 4 164 899 B1**
(45) Date de publication et mention de la délivrance du brevet: **05.03.2025**
(21) Numéro de dépôt: 21737711.8
(22) Date de dépôt: 07.06.2021
(51) Int. Cl.: B60C 11/11, B60C 11/12, B60C 11/13, B60C 11/03

(54) **BANDE DE ROULEMENT DE PNEUMATIQUE POUR UN VÉHICULE POIDS LOURD AVEC UNE RÉSISTANCE AUX AGRESSIONS AMÉLIORÉE**
REIFENLAUFFLÄCHE FÜR EIN SCHWERFAHRZEUG MIT VERBESSERTER SPANNUNGSFESTIGKEIT
TIRE TREAD FOR A HEAVY VEHICLE WITH AN IMPROVED RESISTANCE TO STRESSES

(30) Priorité: 10.06.2020 FR 2006067
(43) Date de publication de la demande: 19.04.2023
(73) Titulaire: COMPAGNIE GENERALE DES ETABLISSEMENTS MICHELIN, 63000 Clermont-Ferrand (FR)
(72) Inventeur: NEAU, Xavier, 63040 CLERMONT-FERRAND Cedex 9 (FR)
(74) Mandataire: M.F.P. Michelin
(86) Numéro de dépôt international: PCT/FR2021/051017
(87) Numéro de publication internationale: WO 2021/250344

(56) Documents cités:
- EP-A1- 3 028 877
- EP-A1- 3 269 567
- US-A1- 2013 075 001
- US-A1- 2018 264 889

## Description

La présente invention a pour objet une bande de roulement de pneumatique pour un véhicule poids lourd destiné à un usage mixte, c'est-à-dire apte à rouler sur des sols goudronnés ou caillouteux. US 2018/0264889 A1 et EP 3 269 567 A1 décrivent des pneumatiques avec une bande de roulement comprenant des blocs délimités par des creux comprenant une rainure et une incision disposée dans le fond de la rainure.

Une bande de roulement, positionnée à la circonférence du pneumatique et constituée par au moins un matériau à base de caoutchouc, est destinée à être usée lors de son contact avec un sol par l'intermédiaire d'une surface de roulement. Elle comprend généralement une sculpture qui est un système de creux séparant des éléments en relief et destiné à assurer l'adhérence du pneumatique, sur des sols rigides ou meubles, pouvant être recouverts d'eau, de neige ou de boue.

Une bande de roulement peut être définie géométriquement par trois dimensions : une épaisseur, selon une direction radiale, une largeur, selon une direction transversale, et une longueur, selon une direction longitudinale.

Ces caractéristiques géométriques de la bande de roulement sont mesurées sur le pneumatique comme suit :
- l'épaisseur est la distance radiale entre la surface de roulement et une surface de fond, sensiblement parallèle à la surface de roulement et passant par le fond du creux le plus profond,
- la largeur est la distance transversale entre les points d'extrémité de la surface de roulement, lorsque celle-ci est en contact avec un sol rigide sous l'action de conditions de charge et de pression appliquées au pneumatique telles que spécifiées, par exemple, par les normes de la « European Tyre and Rim Technical Organisation » (Organisation technique européenne de la jante et du pneumatique) ou ETRTO,
- la longueur est égale à la circonférence extérieure du pneumatique.

La bande de roulement, lors du roulage du pneumatique sur un sol, est soumise à des sollicitations d'abrasion dues aux indenteurs du sol, qui entrainent une réduction progressive de son épaisseur par usure. Par ailleurs, les creux de la bande de roulement sont susceptibles d'emprisonner des cailloux présents sur le sol, ceux-ci pouvant soit être éjectés au cours du roulage, soit migrer vers le fond de creux et générer des fissures susceptibles de se propager à partir du fond de creux vers l'intérieur de la bande de roulement jusqu'à une armature de renforcement de sommet du pneumatique. Ces fissures peuvent à terme entrainer une dégradation du sommet du pneumatique réduisant l'endurance et la durée de vie du pneumatique et, par conséquent, nécessitant son démontage prématuré.

Les creux de la bande de roulement peuvent être de deux types : les rainures et les incisions. Les rainures délimitent des éléments en relief pouvant se déformer sans venir en contact l'un avec l'autre, lors du passage de la bande de roulement dans la surface de contact avec le sol. Les incisions, moins larges que les rainures, ont une largeur telle que les parois des éléments en relief en vis-à-vis les délimitant viennent en contact au moins partiellement l'une avec l'autre, lors du passage de la bande de roulement dans la surface de contact. Pour déterminer la possibilité ou non de contact entre les parois d'un creux, les conditions de charge et de pression appliquées au pneumatique sont celles spécifiées, par exemple, par les normes de l'ETRTO. Les rainures, qui sont les creux les plus larges, présentent la plus forte probabilité de retenir les plus gros cailloux susceptibles de migrer et d'agresser la bande roulement.

Pour diminuer l'impact de la rétention et de la migration des cailloux dans les creux de la bande de roulement, et plus particulièrement dans les rainures, les concepteurs de pneumatiques ont implanté des protubérances de caoutchouc dans les fonds de creux, appelées pontages. Un pontage, implanté dans un creux, relie donc les deux éléments en relief délimitant le creux et apporte ainsi une rigidification locale des éléments en relief, en particulier lorsque ceux-ci sont soumis à des sollicitations de cisaillement transversales à la direction moyenne du creux. Un pontage peut être soit continu, soit discontinu, selon la direction moyenne du creux dans lequel il est implanté ou selon une direction perpendiculaire à cette direction moyenne. Il peut avoir également une hauteur plus ou moins importante par rapport à la profondeur du creux.

L'introduction d'une discontinuité dans un pontage, sous la forme d'au moins une incision s'étendant selon la direction moyenne du creux dans lequel est positionné le pontage, permet de garantir une souplesse du pontage et donc une liaison souple entre les éléments en relief, ce qui contribue, en particulier, à limiter l'usure desdits éléments en relief. Un premier type de pontage discontinu connu comprend une incision unique débouchant dans le creux et positionné au centre du pontage à une distance sensiblement égale de chaque élément en relief. Dans ce premier type de pontage, il a été constaté que la présence d'une incision centrée sur le pontage est susceptible de réduire la performance de protection du fond de creux par le pontage, puisque des cailloux sont susceptibles de migrer dans l'incision. Un deuxième type de pontage discontinu connu comprend deux incisions débouchant dans le creux, chaque incision étant positionnée à la jonction entre le pontage et un des deux éléments en relief. En raison de la présence d'une incision à chacune de ses extrémités, ce deuxième type de pontage présente l'inconvénient de ne pas relier les deux éléments en relief qui le bordent et donc de ne pas assurer efficacement sa fonction de pontage.

La présence d'une incision dans un pontage implique que le creux a une structure étagée, comprenant une première portion radialement extérieure de creux large, de type rainure, débouchant sur la surface de roulement et une deuxième portion radialement intérieure de creux étroit, de type incision, débouchant dans la rainure.

Les inventeurs se sont donnés pour objectif d'augmenter l'endurance du sommet d'un pneumatique pour véhicule poids lourd, comprenant une bande de roulement avec des creux à pontages incisés, en réduisant le risque de migration des cailloux emprisonnés dans ses creux, lors du roulage du pneumatique.

Cet objectif a été atteint par une bande de roulement de pneumatique pour un véhicule poids lourd, destinée à entrer en contact avec un sol par l'intermédiaire d'une surface de roulement et comprenant des creux, délimités par des éléments en relief par rapport à une surface de fond et s'étendant sur une longueur donnée,
- au moins un creux comprenant, sur au moins une partie de sa longueur, une première portion de creux radialement extérieure, débouchant dans la surface de roulement, et une deuxième portion de creux radialement intérieure, débouchant dans la première portion de creux,
- la première portion de creux étant une rainure ayant une largeur W11, mesurée au niveau de la surface de roulement perpendiculairement à une surface moyenne de la rainure, et ayant une profondeur H1, mesurée perpendiculairement à partir de la surface de roulement jusqu'à un fond de rainure ayant une largeur W12,
- la deuxième portion de creux étant une incision, ayant une largeur W2, mesurée perpendiculairement à une surface moyenne de l'incision, et ayant une profondeur H2, mesurée perpendiculairement à partir du fond de rainure jusqu'à un fond d'incision,

- l'incision débouchant dans le fond de rainure à une distance E mesurée entre la surface moyenne de la rainure et la surface moyenne de l'incision,
- la distance E, à laquelle l'incision débouche dans le fond de rainure, étant au moins égale à la largeur W12 du fond de rainure divisée par 6.

De façon essentielle, selon l'invention, lorsqu'une bande de roulement de pneumatique pour un véhicule poids lourd comprend des creux dont le fond est pourvu d'un pontage incisé, c'est-à-dire d'un pontage comprenant une unique incision s'étendant selon la direction moyenne du creux, cette incision débouche au niveau d'une face radialement extérieure du pontage, de façon excentrée par rapport à une surface moyenne du creux. Cet excentrement est défini par une distance E entre la surface moyenne du creux et l'intersection de la surface moyenne de l'incision avec la face radialement extérieure du pontage, ladite face correspondant au fond de la première portion de creux, de type rainure, radialement extérieure au pontage. Selon l'invention, la distance E est au moins égale à la largeur W12 du fond de rainure divisée par 6, ce qui signifie que l'incision débouche à l'extérieur du tiers central du pontage.

En d'autres termes, le creux avec pontage incisé peut être décrit comme un creux étagé comprenant une première portion de creux de type rainure, délimitée par deux éléments en relief, radialement extérieure, débouchant dans la surface de roulement, et une deuxième portion de creux de type incision, traversant au moins partiellement le pontage, radialement intérieure, débouchant dans la première portion de creux au niveau de la face radialement extérieure du pontage. La profondeur totale du creux étagé est la distance radiale entre la surface de roulement et le fond du creux.

La première portion de creux radialement extérieure est une rainure dont les parois ne peuvent pas venir en contact l'une avec l'autre, lors du passage de la bande de roulement dans la surface de contact avec le sol. Elle s'étend selon une surface moyenne sensiblement perpendiculaire à la surface de roulement. La première portion de creux a, au niveau de la surface de roulement, une largeur W11, et, au niveau de son fond, une largeur W12, respectivement mesurées perpendiculairement à la surface moyenne et entre les parois en vis-à-vis des éléments en relief délimitant la rainure. La première portion de creux a une profondeur H1, mesurée perpendiculairement à partir de la surface de roulement jusqu'au fond de rainure. Autrement dit la profondeur H1 est la distance radiale maximale entre la surface de roulement et le fond de la rainure.

La deuxième portion de creux radialement intérieure est une incision dont les parois viennent en contact au moins partiellement l'une avec l'autre, lors du passage de la bande de roulement dans la surface de contact. Elle s'étend selon une surface moyenne pouvant être inclinée, et donc non nécessairement perpendiculaire, par rapport au fond de la rainure. La deuxième portion de creux a une largeur W2, mesurée entre les parois de l'incision perpendiculairement à une surface moyenne de l'incision, et une profondeur H2, mesurée perpendiculairement à partir du fond de rainure jusqu'à un fond d'incision. En d'autres termes, la profondeur H2 est la distance radiale entre le fond de rainure et le fond d'incision. La largeur W2 de l'incision est généralement sensiblement constante sur toute la profondeur H2 et peut donc être mesurée à tout niveau radial compris entre le fond de rainure et le fond d'incision.

La distance E, à laquelle l'incision débouche dans le fond de rainure, est par conséquent la distance entre l'intersection de la surface moyenne de la rainure avec le fond de rainure et l'intersection de la surface moyenne de l'incision avec le fond de rainure.

L'avantage d'une telle incision excentrée dans le pontage est de réduire la probabilité de migration d'un caillou emprisonné dans la rainure, car la trajectoire du caillou initialement dans l'axe de la rainure est déviée par l'excentrement de l'incision. Donc la probabilité de migration du caillou dans l'incision est réduite et le caillou est potentiellement bloqué au niveau de la rainure, voire éjecté du creux. Par conséquent, le risque d'agression de l'armature de sommet, radialement intérieure à la bande de roulement, est diminué et son endurance est augmentée, donc la durée de vie du pneumatique est augmentée.

Avantageusement la distance E est au plus égale à la moitié de la largeur W12 du fond de rainure. Plus la distance E est importante, plus la trajectoire du caillou est déviée, ce qui implique que le risque de migration du caillou dans l'incision diminue. Lorsque la distance E est égale à la moitié de la largeur W12 du fond de rainure, l'incision débouche au pied de l'un des deux éléments en relief délimitant la rainure, ce qui est la position limite de l'extrémité débouchante de l'incision.

Préférentiellement la largeur W11 de la rainure est au moins égale à la largeur W12 du fond de rainure. Cette condition implique que les parois de la rainure ne sont pas radiales et que la rainure a, dans un plan radial perpendiculaire à la direction moyenne de la rainure, une section trapézoïdale dont la grande base est la partie débouchante dans la surface de roulement et la petite base est le fond de rainure. Cette section trapézoïdale facilite l'éjection des cailloux en roulage, en créant un cône d'éjection, et facilite également la fabrication du pneumatique, plus précisément le démoulage du creux en fin de cuisson du pneumatique.

Encore préférentiellement la largeur W11 de la rainure est au moins égale à 4 mm. En dessous de cette valeur, la rainure ne fonctionne plus comme une rainure sans auto-contact et il n'y a plus de risque de rétention de cailloux et donc de migration de cailloux.

De plus le rapport W11/W12 doit rester limité, typiquement au plus égal à 3. Cette condition limite l'inclinaison des parois de la rainure, et donc limite le volume de la rainure, ce qui garantit, vis-à-vis des éléments en relief délimitant la rainure, un volume de matériau à user suffisant pour la performance en usure de la bande de roulement.

La profondeur H1 de la rainure est avantageusement au moins égale à 0.5 fois la profondeur H2 de l'incision. En d'autres termes, la profondeur H1 de la rainure est au moins égale au tiers de la profondeur totale H du creux, définie comme la somme de la profondeur H1 de la rainure et de la profondeur H2 de l'incision. C'est un domaine usuel de conception garantissant un volume de rainures suffisant vis-à-vis de l'adhérence.

La profondeur H1 de la rainure est encore avantageusement au plus égale à 2 fois la profondeur H2 de l'incision. En d'autres termes, la profondeur H1 de la rainure est au plus égale aux deux tiers de la profondeur totale H du creux, définie comme la somme de la profondeur H1 de la rainure et de la profondeur H2 de l'incision. C'est un domaine usuel de conception garantissant une hauteur de pontage suffisante vis-à-vis de la protection de fond de creux.

Préférentiellement la largeur W2 de l'incision est au plus égale à 2 mm. Au-dessus de cette valeur, l'incision ne fonctionne plus comme une incision, car ses parois n'entrent plus en contact l'une avec l'autre.

Encore préférentiellement la largeur W2 de l'incision est au moins égale à 0.4 mm. La valeur de 0.4 mm est un minimum technologique de fabrication, en-dessous duquel la réalisation d'une lamelle de moulage de l'incision devient problématique.

Il est avantageux que l'incision ait une surface moyenne formant, par rapport à une direction radiale perpendiculaire à la surface de roulement, un angle D au plus égal à 15°. Une inclinaison de la surface moyenne de l'incision permet de ralentir la migration d'un caillou à l'intérieur de celle-ci, sachant que la direction privilégiée de migration d'un caillou est a priori radiale. En outre une limitation supérieure de cette inclinaison à 15° facilite le démoulage sensiblement radial, en fin de cuisson du pneumatique.

Le fond d'incision a avantageusement un contour arrondi ayant un rayon minimal R au moins égal à 1.5 fois la largeur W2 de l'incision. Cet arrondi en fond de sillon, usuellement appelé « goutte d'eau » par les concepteurs, est un dispositif anti-fissuration qui retarde l'initiation d'une fissuration en fond d'incision en diminuant les contraintes locales.

Selon un mode de réalisation particulier, la surface moyenne de la rainure forme, avec la direction longitudinale, un angle au plus égal à 45°. En d'autres termes, la rainure, et donc le creux étagé dont elle est la première portion radialement extérieure, est sensiblement longitudinale, c'est-à-dire longitudinale ou oblique avec une inclinaison de sa surface moyenne par rapport à la direction longitudinale inférieure ou égale à 45°. En effet un tel creux longitudinal ou oblique emprisonne plus facilement un caillou, en raison de son orientation sensiblement parallèle à la direction de roulage du pneumatique : d'où l'intérêt d'un pontage selon l'invention dans ce type de creux.

Selon une variante préférée de creux sensiblement longitudinal tel que défini précédemment, le creux est continu sur toute la longueur de la bande de roulement. Un creux sensiblement longitudinal comprenant un pontage selon l'invention sur toute la longueur de la bande de roulement est ainsi protégé efficacement vis-à-vis de la rétention des cailloux, sur toute la circonférence du pneumatique.

Selon un autre mode de réalisation particulier, la surface moyenne de la rainure forme, avec la direction transversale, un angle au plus égal à 45°. En d'autres termes, la rainure, et donc le creux étagé dont elle est la première portion radialement extérieure, est sensiblement transversale, c'est-à-dire transversale ou oblique avec une inclinaison de sa surface moyenne par rapport à la direction transversale inférieure ou égale à 45°.

Selon une variante préférée de creux sensiblement transversal tel que défini précédemment, le creux est positionné dans une portion médiane de la bande de roulement ayant une largeur de préférence égale à la largeur de la bande de roulement divisée par 3. Un creux transversal étant, par convention, un creux dont la surface moyenne forme, avec la direction transversale, un angle au plus égal à 45°, donc plus proche de la direction transversale que de la direction longitudinale de roulage, l'éjection des cailloux hors des creux transversaux est en effet plus difficile. Par conséquent, lorsqu'une bande de roulement comprend des creux transversaux dans sa portion médiane, usuellement définie comme le tiers central de la bande de roulement, il est particulièrement intéressant que ces creux soient protégés par un pontage incisé selon l'invention, car cette portion de bande de roulement est soumise à des pressions de contact élevées, ce qui favorise la captation éventuelle de cailloux présents dans la surface de contact du pneumatique avec le sol.

L'invention a également pour objet un pneumatique pour véhicule poids lourd comprenant une bande de roulement selon l'un quelconque des modes de réalisation précédemment décrits.

Les caractéristiques de l'invention sont illustrées par les figures 1 à 3 schématiques et non représentées à l'échelle suivantes :
- Figure 1 : Vue en coupe radiale d'un creux étagé selon l'invention.
- Figure 2 : Vue en perspective d'un exemple de portion de bande de roulement selon l'invention.
- Figure 3 : Vue en coupe radiale d'un creux étagé de l'exemple de portion de bande de roulement selon l'invention, présenté sur la figure 2.

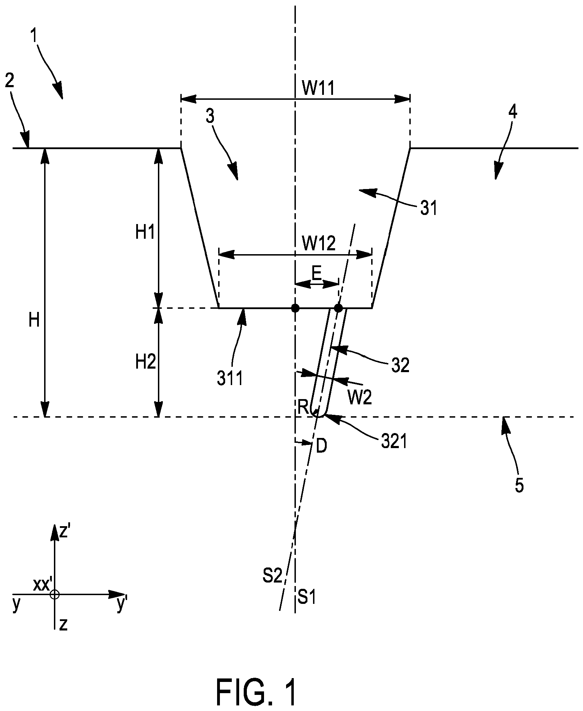

La figure 1 est une vue en coupe radiale d'un creux étagé selon l'invention. La coupe radiale est réalisée dans un plan défini par la direction radiale zz' et une direction yy', perpendiculaire à une direction moyenne du creux xx'. Le creux 3 de la bande de roulement 1 de pneumatique pour un véhicule poids lourd, destinée à entrer en contact avec un sol par l'intermédiaire d'une surface de roulement 2, est délimité par des éléments 4 en relief par rapport à une surface de fond 5 et s'étend sur une longueur donnée. Le creux 3 comprend, sur au moins une partie de sa longueur, une première portion de creux 31 radialement extérieure, débouchant dans la surface de roulement 2, et une deuxième portion de creux 32 radialement intérieure, débouchant dans la première portion de creux 31. La première portion de creux 31 est une rainure ayant une largeur W11, mesurée au niveau de la surface de roulement 2 perpendiculairement à une surface moyenne S1 de la rainure 31, et ayant une profondeur H1, mesurée perpendiculairement à partir de la surface de roulement 2 jusqu'à un fond de rainure 311 ayant une largeur W12. La deuxième portion de creux 32 est une incision, ayant une largeur W2, mesurée perpendiculairement à une surface moyenne S2 de l'incision 32, et ayant une profondeur H2, mesurée perpendiculairement à partir du fond de rainure 311 jusqu'à un fond d'incision 321. L'incision 32 débouche dans le fond de rainure 311 à une distance E mesurée entre la surface moyenne S1 de la rainure 31 et la surface moyenne S2 de l'incision 32. Selon l'invention, la distance E, à laquelle l'incision 32 débouche dans le fond de rainure 311, est au moins égale à la largeur W12 du fond de rainure 311 divisée par 6. Dans le mode de réalisation représenté sur la figure 1, l'incision 32 a une surface moyenne S2 formant, par rapport à une direction radiale zz' perpendiculaire à la surface de roulement 2, un angle D au plus égal à 15°. De plus le fond d'incision 321 a un contour arrondi ayant un rayon minimal R au moins égal à 1.5 fois la largeur W2 de l'incision 32.

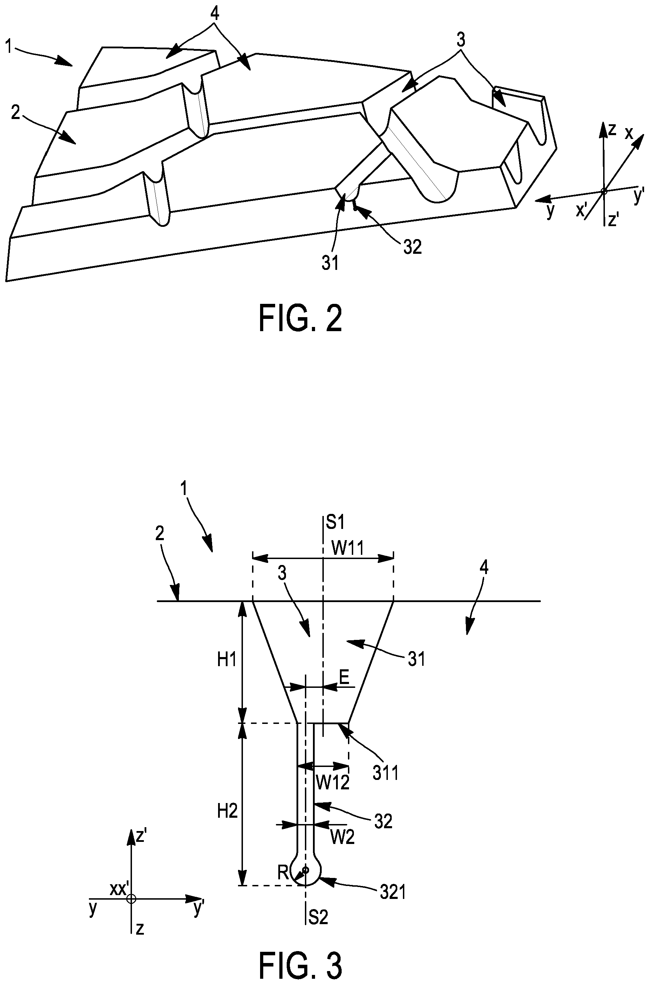

La figure 2 est une vue en perspective d'un exemple de portion de bande de roulement 1 selon l'invention. Les directions représentées sur la figure sont respectivement la direction circonférentielle XX', la direction transversale YY' et une direction radiale ZZ' de la bande de roulement. La figure 2 représente une portion de bande de roulement 1 de pneumatique pour un véhicule poids lourd, destinée à entrer en contact avec un sol par l'intermédiaire d'une surface de roulement 2 et comprenant des creux 3, selon l'invention, délimités par des éléments 4 en relief par rapport à une surface de fond 5. Au moins une partie des creux 3, en particulier les creux 3 sensiblement longitudinaux, comprennent une première portion de creux 31 radialement extérieure, débouchant dans la surface de roulement 2, et une deuxième portion de creux 32 radialement intérieure, débouchant dans la première portion de creux 31. La bande de roulement 2 comprend également des creux 3 sensiblement transversaux, positionnés dans une portion médiane et dans deux portions latérales, lesdits creux sensiblement transversaux débouchant dans les creux sensiblement longitudinaux. La sculpture d'une telle bande roulement est donc une sculpture à blocs, particulièrement adaptée à un usage sur un essieu moteur de véhicule poids lourd.

La figure 3 est une vue en coupe radiale d'un creux étagé de l'exemple de portion de bande de roulement selon l'invention tel que présenté sur la figure 2. Elle est réalisée dans un plan défini par la direction radiale zz' et une direction yy', perpendiculaire à une direction moyenne du creux xx'. Les directions xx', yy' et zz' définissent un repère local relatif au creux considéré, la direction radiale locale zz' correspondant à la direction radiale ZZ' de la bande de roulement telle que représentée sur la figure 2. Les caractéristiques représentées sur la figure 2 sont identiques à celles de la figure 1. Dans le cas particulier représenté, l'incision 32 débouche dans le fond de rainure 311 à une distance E par rapport à la surface moyenne S1 de la rainure 31 égale à la moitié de la largeur W12 du fond de rainure 311, c'est-à-dire à dire en pied de paroi avec un excentrement maximal. En outre l'incision 32 est perpendiculaire au fond de rainure 311, ce qui implique que sa surface moyenne S2 est parallèle à la surface moyenne S1 de la rainure 31.

L'exemple de bande de roulement présenté sur les figures 2 et 3 est un exemple étudié par les inventeurs dans la dimension de pneumatique 13R22.5, pour un pneumatique à usage mixte plus particulièrement destiné à équiper un essieu moteur. Ce pneumatique est destiné à porter une charge égale à 4000 kg, pour une pression de gonflage égale à 8.6 bars, selon le « Standards Manual 2019 » de la norme ETRTO.

Le tableau 1 ci-dessous présente les caractéristiques de la bande de roulement testée :

**[Tableau 1]**

| **Caractéristiques** | **Valeurs** |
|---|---|
| Largeur W11 de la rainure 31 | 10.4 mm |
| Largeur W12 de la rainure 31 | 4 mm |
| Hauteur H1 de la rainure 31 | 10 mm |
| Largeur W2 de l'incision 32 | 0.8 mm |
| Hauteur H2 de l'incision 32 | 11.2 mm |
| Inclinaison D de l'incision 32 | 0° |
| Distance E | 2 mm |

La bande de roulement selon l'invention, développée pour un pneumatique usuel soumis à une pression de gonflage, peut également être utilisée pour un bandage non pneumatique, mais également pour tout ensemble roulant non pneumatique destiné à équiper un véhicule.

## Revendications

1. Bande de roulement (1) de pneumatique pour un véhicule poids lourd, destinée à entrer en contact avec un sol par l'intermédiaire d'une surface de roulement (2) et comprenant des creux (3), délimités par des éléments (4) en relief par rapport à une surface de fond (5) et s'étendant sur une longueur donnée,
- au moins un creux (3) comprenant, sur au moins une partie de sa longueur, une première portion de creux (31) radialement extérieure, débouchant dans la surface de roulement (2), et une deuxième portion de creux (32) radialement intérieure, débouchant dans la première portion de creux (31),
- la première portion de creux (31) étant une rainure ayant une largeur W11, mesurée au niveau de la surface de roulement (2) perpendiculairement à une surface moyenne (S1) de la rainure (31), et ayant une profondeur H1, mesurée perpendiculairement à partir de la surface de roulement (2) jusqu'à un fond de rainure (311) ayant une largeur W12,
- la deuxième portion de creux (32) étant une incision, ayant une largeur W2, mesurée perpendiculairement à une surface moyenne (S2) de l'incision (32), et ayant une profondeur H2, mesurée perpendiculairement à partir du fond de rainure (311) jusqu'à un fond d'incision (321),
- la profondeur H1 de la rainure (31) étant au moins égale à 0.5 fois la profondeur H2 de l'incision (32) et au plus égale à 2 fois la profondeur H2 de l'incision (32),
- l'incision (32) débouchant dans le fond de rainure (311) à une distance E, mesurée entre la surface moyenne (S1) de la rainure (31) et la surface moyenne (S2) de l'incision (32),
**caractérisée en ce que** la distance E, à laquelle l'incision (32) débouche dans le fond de rainure (311), est au moins égale à la largeur W12 du fond de rainure (311) divisée par 6.

2. Bande de roulement (1) selon la revendication 1 **dans laquelle** la distance E est au plus égale à la moitié de la largeur W12 du fond de rainure (311).

3. Bande de roulement (1) selon l'une des revendications 1 ou 2 **dans laquelle** la largeur W11 de la rainure (31) est au moins égale à la largeur W12 du fond de rainure (311).

4. Bande de roulement (1) selon l'une quelconque des revendications 1 à 3 **dans laquelle** la largeur W11 de la rainure (31) est au moins égale à 4 mm.

5. Bande de roulement (1) selon l'une quelconque des revendications 1 à 4 **dans laquelle** la largeur W2 de l'incision (32) est au plus égale à 2 mm.

6. Bande de roulement (1) selon l'une quelconque des revendications 1 à 5 **dans laquelle** la largeur W2 de l'incision (32) est au moins égale à 0.4 mm.

7. Bande de roulement (1) selon l'une quelconque des revendications 1 à 6 **dans laquelle** l'incision (32) a une surface moyenne (S2) formant, par rapport à une direction radiale (ZZ') perpendiculaire à la surface de roulement (2), un angle D au plus égal à 15°.

8. Bande de roulement (1) selon l'une quelconque des revendications 1 à 7 **dans laquelle** le fond d'incision (321) a un contour arrondi ayant un rayon minimal R au moins égal à 1.5 fois la largeur W2 de l'incision (32).

9. Bande de roulement (1) selon l'une quelconque des revendications 1 à 8 **dans laquelle** la surface moyenne (S1) de la rainure (31) forme, avec la direction longitudinale (XX'), qui correspond à la direction circonférentielle de la bande de roulement, un angle au plus égal à 45°.

10. Bande de roulement (1) selon la revendication 9 **dans laquelle** le creux (3) est continu sur toute la longueur de la bande de roulement.

11. Bande de roulement (1) selon l'une quelconque des revendications 1 à 8 **dans laquelle** la surface moyenne (S1) de la rainure (31) forme, avec la direction transversale (YY') de la bande de roulement, un angle au plus égal à 45°.

12. Bande de roulement (1) selon la revendication 11 **dans laquelle** le creux (3) est positionné dans une portion médiane de la bande de roulement ayant une largeur de préférence égale à la largeur de la bande de roulement divisée par 3.

13. Pneumatique pour véhicule poids lourd comprenant une bande de roulement (1) selon l'une quelconque des revendications 1 à 12.

## Patentansprüche

1. Laufstreifen (1) eines Reifens für ein Schwerlastfahrzeug, welcher dazu bestimmt ist, über eine Lauffläche (2) mit einem Boden in Kontakt zu kommen, und Vertiefungen (3) umfasst, die von gegenüber einer Bodenfläche (5) erhaben ausgebildeten Elementen (4) begrenzt werden und sich über eine gegebene Länge erstrecken,
- wobei mindestens eine Vertiefung (3) auf wenigstens einem Teil ihrer Länge einen radial äußeren ersten Vertiefungsabschnitt (31), der in die Lauffläche (2) mündet, und einen radial inneren zweiten Vertiefungsabschnitt (32), der in den ersten Vertiefungsabschnitt (31) mündet, umfasst,
- wobei der erste Vertiefungsabschnitt (31) eine Rille ist, die eine Breite W11 aufweist, gemessen an der Lauffläche (2) senkrecht zu einer mittleren Fläche (S1) der Rille (31), und eine Tiefe H1 aufweist, gemessen von der Lauffläche (2) aus senkrecht bis zu einem Rillenboden (311), der eine Breite W12 aufweist,
- wobei der zweite Vertiefungsabschnitt (32) ein Einschnitt ist, der eine Breite W2 aufweist, gemessen senkrecht zu einer mittleren Fläche (S2) des Einschnitts (32), und eine Tiefe H2 aufweist, gemessen vom Rillenboden (311) aus senkrecht bis zu einem Einschnittsboden (321),
- wobei die Tiefe H1 der Rille (31) mindestens gleich dem 0,5-Fachen der Tiefe H2 des Einschnitts (32) und höchstens gleich dem 2-Fachen der Tiefe H2 des Einschnitts (32) ist,
- wobei der Einschnitt (32) in den Rillenboden (311) in einem Abstand E mündet, gemessen zwischen der mittleren Fläche (S1) der Rille (31) und der mittleren Fläche (S2) des Einschnitts (32),
**dadurch gekennzeichnet, dass** der Abstand E, in dem der Einschnitt (32) in den Rillenboden (311) mündet, mindestens gleich der durch 6 dividierten Breite W12 des Rillenbodens (311) ist.

2. Laufstreifen (1) nach Anspruch 1, wobei der Abstand E höchstens gleich der Hälfte der Breite W12 des Rillenbodens (311) ist.

3. Laufstreifen (1) nach einem der Ansprüche 1 oder 2, wobei die Breite W11 der Rille (31) mindestens gleich der Breite W12 des Rillenbodens (311) ist.

4. Laufstreifen (1) nach einem der Ansprüche 1 bis 3, wobei die Breite W11 der Rille (31) mindestens 4 mm beträgt.

5. Laufstreifen (1) nach einem der Ansprüche 1 bis 4, wobei die Breite W2 des Einschnitts (32) höchstens 2 mm beträgt.

6. Laufstreifen (1) nach einem der Ansprüche 1 bis 5, wobei die Breite W2 des Einschnitts (32) mindestens 0,4 mm beträgt.

7. Laufstreifen (1) nach einem der Ansprüche 1 bis 6, wobei der Einschnitt (32) eine mittlere Fläche (S2) aufweist, die bezüglich einer zur Lauffläche (2) senkrechten radialen Richtung (ZZ') einen Winkel D bildet, der höchstens 15° beträgt.

8. Laufstreifen (1) nach einem der Ansprüche 1 bis 7, wobei der Einschnittsboden (321) eine abgerundete Kontur mit einem minimalen Radius R aufweist, der mindestens gleich dem 1,5-Fachen der Breite W2 des Einschnitts (32) ist.

9. Laufstreifen (1) nach einem der Ansprüche 1 bis 8, wobei die mittlere Fläche (S1) der Rille (31) mit der Längsrichtung (XX'), die der Umfangsrichtung des Laufstreifens entspricht, einen Winkel bildet, der höchstens 45° beträgt.

10. Laufstreifen (1) nach Anspruch 9, wobei die Vertiefung (3) auf der gesamten Länge des Laufstreifens durchgehend ist.

11. Laufstreifen (1) nach einem der Ansprüche 1 bis 8, wobei die mittlere Fläche (S1) der Rille (31) mit der Querrichtung (YY') des Laufstreifens einen Winkel bildet, der höchstens 45° beträgt.

12. Laufstreifen (1) nach Anspruch 11, wobei die Vertiefung (3) in einem mittleren Abschnitt des Laufstreifens positioniert ist, der eine Breite aufweist, die vorzugsweise gleich der durch 3 dividierten Breite des Laufstreifens ist.

13. Reifen für ein Schwerlastfahrzeug, welcher einen Laufstreifen (1) nach einem der Ansprüche 1 bis 12 umfasst.

## Claims

1. Tread (1) for a tyre for a heavy-duty vehicle, which tread is intended to come into contact with the ground via a tread surface (2) and comprises voids (3) that are delimited by elements (4) in relief with respect to a bottom surface (5) and extend over a specific length,
- at least one void (3) comprising, over at least some of its length, a first, radially outer void portion (31) leading into the tread surface (2), and a second, radially inner void portion (32) leading into the first void portion (31),
- the first void portion (31) being a groove having a width W11, measured on the tread surface (2) perpendicularly to a mean surface (S1) of the groove (31), and having a depth H1, measured perpendicularly from the tread surface (2) to a groove bottom (311) having a width W12,
- the second void portion (32) being a sipe having a width W2, measured perpendicularly to a mean surface (S2) of the sipe (32), and having a depth H2, measured perpendicularly from the groove bottom (311) to a sipe bottom (321),
- the depth H1 of the groove (31) being at least equal to 0.5 times the depth H2 of the sipe (32) and at most equal to twice the depth H2 of the sipe (32),
- the sipe (32) leading into the groove bottom (311) at a distance E, measured between the mean surface (S1) of the groove (31) and the mean surface (S2) of the sipe (32),
**characterized in that** the distance E at which the sipe (32) leads into the groove bottom (311) is at least equal to the width W12 of the groove bottom (311) divided by 6.

2. Tread (1) according to Claim 1, **wherein** the distance E is at most equal to half of the width W12 of the groove bottom (311).

3. Tread (1) according to either of Claims 1 and 2, **wherein** the width W11 of the groove (31) is at least equal to the width W12 of the groove bottom (311).

4. Tread (1) according to any one of Claims 1 to 3, **wherein** the width W11 of the groove (31) is at least equal to 4 mm.

5. Tread (1) according to any one of Claims 1 to 4, **wherein** the width W2 of the sipe (32) is at most equal to 2 mm.

6. Tread (1) according to any one of Claims 1 to 5, **wherein** the width W2 of the sipe (32) is at least equal to 0.4 mm.

7. Tread (1) according to any one of Claims 1 to 6, **wherein** the sipe (32) has a mean surface (S2) forming an angle D at most equal to 15° with respect to a radial direction (ZZ') perpendicular to the tread surface (2).

8. Tread (1) according to any one of Claims 1 to 7, **wherein** the sipe bottom (321) has a rounded contour having a minimum radius R at least equal to 1.5 times the width W2 of the sipe (32).

9. Tread (1) according to any one of Claims 1 to 8, **wherein** the mean surface (S1) of the groove (31) forms, with the longitudinal direction (XX') which is the circumferential direction of the tread, an angle at most equal to 45°.

10. Tread (1) according to Claim 9, **wherein** the void (3) is continuous over the entire length of the tread.

11. Tread (1) according to any one of Claims 1 to 8, **wherein** the mean surface (S1) of the groove (31) forms, with the transverse direction (YY') of the tread, an angle at most equal to 45°.

12. Tread (1) according to Claim 11, **wherein** the void (3) is positioned in a median portion of the tread having a width preferably equal to the width of the tread divided by 3.

13. Tyre for a heavy-duty vehicle, comprising a tread (1) according to any one of Claims 1 to 12.
